# EUROPÄISCHE PATENTANMELDUNG

(11) **EP 3 225 963 A1**
(43) Veröffentlichungstag der Anmeldung: **04.10.2017**
(21) Anmeldenummer: 17162755.7
(22) Anmeldetag: 24.03.2017
(51) Int. Cl.: G01L 1/20, G01L 1/18

(54) **DRUCK- UND POSITIONSMESSSYSTEM FÜR MANUELL BETÄTIGBARE EINRICHTUNGEN MIT EINEM HANDGRIFF**

(30) Priorität: 31.03.2016 DE 102016105842
(71) Anmelder: Eoswiss Engineering Sarl, 1206 Genève (CH)
(72) Erfinder: Astl, Georg, 1206 Genève (CH); Sven, Schneeberger, 2502 Biel/Bienne (CH); Luggen, David, 2502 Biel/Bienne (CH); Dutoit, Bertrand, 1446 Baulmes (CH)
(74) Vertreter: Limbeck, Achim

(57) **Zusammenfassung**

Die vorliegende Erfindung betrifft ein Druck- und Positionsmesssystem für manuell betätigbare Einrichtungen (1) mit einem Handgriff (10), bei dem die Griffzone (11) der am Handgriff (10) der Einrichtung (1) anliegenden Finger- und Handflächen mittels mindestens einem Drucksensor (12) erfasst wird. Das erfindungsgemäße Druck- und Positionsmesssystem ist dadurch gekennzeichnet, dass der mindestens eine Drucksensor (12) eine resistive Folie (13) sowie eine Vielzahl elektrisch isolierter Elektrodenpaare (14,15) umfasst.

## Beschreibung

### Technisches Gebiet

Die vorliegende Erfindung betrifft ein Druck- und Positionsmesssystem für manuell betätigbare Einrichtungen mit einem Handgriff, insbesondere aber nicht ausschließlich für Sporttrainingsgeräte wie bspw. Golf- oder Tennisschläger, Joysticks, physikalische Therapiegeräte, etc. bei dem die Griffzone der am Handgriff der Einrichtung anliegenden Finger- und Handflächen mittels mindestens einem Drucksensor erfasst wird.

### Stand der Technik

Gemäß dem Stand der Technik sind Druck- und Positionsmesssysteme für manuell betätigbare Einrichtungen mit einem Handgriff bereits unlängst bekannt. In der Patentschrift US 8.449.410 B1 wird ein Sporttrainingsgerät mit einem montierten Drucksensor beschrieben, bei dem der Sensor den Griffdruck auf einer Zone überwacht, in der Handfläche und Zeigefinger aufeinander treffen. Der Sensor löst einen Vibrationsalarm aus, wenn der Druck zu hoch ist.

Darüber hinaus ist aus der Offenlegungsschrift WO 2005/094953 A2 ein System zur Bestimmung der Leistungseigenschaften eines Golfschwungs bekannt, bei der ein instrumentierter Golfschläger beschrieben wird, der einen montierten Beschleunigungsmesser und gegebenenfalls andere Messeinrichtungen wie einen Griffsensor umfasst. Hierbei werden eine Vielzahl von Parametern gemessen und per Funk an ein tragbares Gerät gesendet.

Der Nachteil dieser vorgenannten Einrichtungen besteht in erster Linie darin, dass die vorgeschlagenen Lösungen nicht mit der erforderlichen Zeitauflösung messen und daher keine komplexen Bewegungsmuster erfassen können. Dabei setzt der Schwung an Handsportgeräten eine komplexe Reihe von Finger- und Handflächenpositionen und ausgeübten Drücken auf den Handgriff in Gang. Darüber hinaus wird der auf den Handgriff ausgeübte Druck der Finger und der Druck der Handfläche nicht einzeln und überdies auch nicht parallel gemessen. Ferner ist der Drucksensor in der WO 2005/094953 A2 über die gesamte Länge des Handgriffes montiert, so dass eine Positionserfassung nicht möglich ist.

Weiterhin sind die bekannten Drucksensoren nicht in der Lage, pixelgenaue Messungen durchzuführen. Eine Druckverteilung der einzelnen Fingersegmente kann daher nicht gemessen werden.

Zudem ist anzuführen, dass die drahtlose Übertragung der von den Drucksensoren ermittelten Werten bzw. gesendeten Signalen große Mengen an Energie verbrauchen, da gemäß dem Stand der Technik alle Signale - auch von "leeren" Sensoren - übertragen werden.

Aus der Druckschrift DE 19723973 A1 ist es bekannt, zur Erfassung von Lenkkräften innerhalb eines Handgriffes, Kraftmesser durch Streifen aus einem seinen elektrischen Widerstand in Abhängigkeit von einer auf seine Grundrißfläche insgesamt aufgebrachten Druckkraftbeaufschlagung varierendem Folienmaterial zu bilden und an einem einen quadratischen Profilquerschnitt aufweisenden Griffsteg eines Handgriffes anzuordnen.

Darüber hinaus ist es aus der DE 19843486 A1 bekannt, dass die der Erzeugung von Impulsen zugeordneten Schalter oder Fühler aus an den Hangriffen ausgeübte Zug- oder Schubkräfte bzw. Lenkkräfte erkennenden und in Steuerimpulse umsetzenden Kraftmessern bestehen, insbesondere aus Streifen eines seinen elektrischen Widerstand proportional zu einer auf seine Gesamtfläche insgesamt aufgebrachten Druckkraft ändernden Folienmaterials.

Ferner ist aus der US 20140366650 A1 ein Druck-, Kraft- und Orientierungssensorsystem bekannt, bei dem ihrem Rahmen der Anwendung auf Sportgeräten, einschließlich Golfschlägern, eine Sensoranordnung aus flexiblem und nachgiebigem piezo-resistivem Material die Erfassung von Greifkraftdaten für eine Anordnung von Positionen um und entlang des Golfschlägergriffgriffs ermöglicht.

### Darstellung der Erfindung

Der vorliegenden Erfindung liegt die Aufgabe zu Grunde, ein Druck- und Positionsmesssystem zu schaffen, welches die vorgenannten Probleme ausräumt und welches geeignet ist, eine pixelgenaue Positionierung der Finger- und Handflächen und deren ausgeübten Drücke zu ermitteln und an ein Empfangsgerät weiterzuleiten.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Druck- und Positionsmesssystems sind in den abhängigen Unteransprüchen angegeben.

Erfindungsgemäß ist ein Druck- und Positionsmesssystem der eingangs genannten Art dadurch gekennzeichnet, dass der mindestens eine Drucksensor eine resistive Folie sowie eine Vielzahl elektrisch isolierter Elektrodenpaare umfasst.

Die Folie besteht vorzugsweise aus einem flexiblen technischen Kunststoff, vorzugsweise Polyamide. Die Elektroden bestehen vorteilhaft aus Kupfer mit einer Oberfläche aus Nickel-Gold.

Zur Druckmessung erfolgt in einer ersten Ausführungsform der Erfindung eine Ermittlung des in Abhängigkeit vom Anpressdruck und umgekehrt proportional zum Widerstand stehenden Spannungsabfalls der zwischen zwei Elektroden herzustellenden, elektrischen Verbindung. Hierzu wird an den Elektrodenpaaren eine Spannung angelegt. Der Spannungsabfall über dem Sensorelement ist proportional zum Widerstand zwischen den Elektroden, gegeben durch den Anpressdruck der resistiven Folie. Der Spannungsabfall kann bspw. mit Hilfe eines Analog-zu-Digital-Converters (ADC) gemessen werden.

Zur Druckmessung kann in einer weiteren Ausführungsform der Erfindung eine Ermittlung des in Abhängigkeit vom Anpressdruck und umgekehrt proportional zum Widerstand stehenden Stroms der zwischen zwei Elektroden herzustellenden, elektrischen Verbindung erfolgen. Hierzu wird ebenfalls an den Elektrodenpaaren eine Spannung angelegt. Durch das Sensorelement fließt ein Strom. Der Strom verhält sich umgekehrt proportional zum Widerstand zwischen den Elektroden, gegeben durch den Anpressdruck der resistiven Folie. Mit dem Strom kann ein Kondensator geladen werden. Die Ladezeit ist abhängig vom Anpressdruck der Folie. Die Ladezeit kann in diesem Ausführungsbeispiel mit einem handelsüblichen Timer z.B. LM555 ausgewertet werden.

Weiterhin kann zur Druckmessung eine Ermittlung des in Abhängigkeit vom Anpressdruck stehenden Widerstands zwischen zwei Elektroden herzustellenden, elektrischen Verbindung erfolgen.

Da gemäß der vorliegenden Erfindung jedes Sensorelement quasi pixelgenau den Druck und die Position der Finger und Handflächen ermittelt, können dadurch sehr detaillierte Analysen der auf einen Handgriff ausgeübten Kräfte durchgeführt werden. Dies ist bspw. sehr wichtig bei der Behandlung von Schlaganfall-Patienten aber auch bei der Analyse eines sehr komplexen Golfschwungs sowie anderen Übungen.

Die Messungen werden vorteilhaft mit ausreichender Zeitauflösung durchgeführt, um den komplexen Druck- und Positionsmustern im Laufe der Zeit zu folgen.

Die Daten werden durch eine in der Einrichtung angeordnete Übertragungsvorrichtung an ein Empfangsgerät zur weiteren Auswertung bzw. Analyse übertragen. Die Übertragungseinrichtung überträgt die Signale vorzugsweise über eine Antenne, die sich im Fall eines elektrisch leitenden Rumpfmaterials (bspw. eines Carbonfaser-Golfschlägers) nur wenige mm außerhalb der Einrichtung erstreckt; dadurch wird die Statik der Einrichtung nicht verzerrt.

Die vorverarbeiteten Signale werden vorzugsweise an ein mitgeführtes Handgerät oder an einen PC übertragen. Das Signal kann zusätzlich dazu verwendet werden, um bspw. die Gesamtbewegung eines Spielers zum Beispiel auf einem Tennisplatz zu verfolgen, einem Golfplatz oder in der Trainingsumgebung einer physikalischen Therapie. Die übertragenen Daten werden durch eine Mustererkennungssoftware analysiert. Die analysierten Daten werden gespeichert, in einem Netzwerk freigegeben oder für ein sofortiges Feedback an den Anwender gesendet.

### Kurzbeschreibung der Zeichnungen

Weitere Ziele, Merkmale, Vorteile und Anwendungsmöglichkeiten des erfindungsgemäßen Druck- und Positionsmesssystems ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig.1 ein beispielhaftes Prinzip des Sensormusters,
Fig.2 das Druck- und Positionsmesssystem an einer Einrichtung,
Fig.3 aufeinandergelegte Elektroden,
Fig.4 ineinander geführte Elektroden und
Fig.5 Blockschema des Druck- und Positionsmesssystems.

### Ausführung der Erfindung

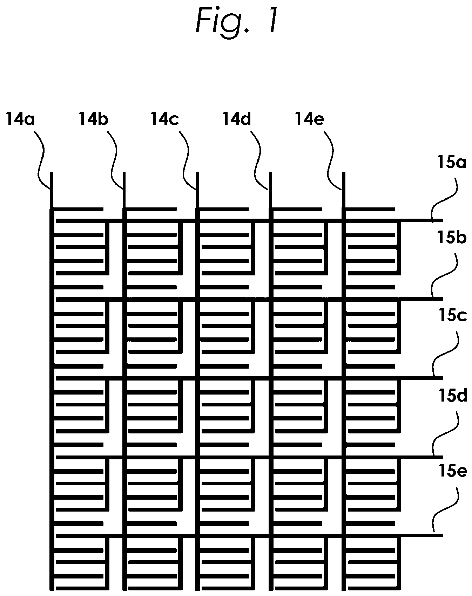

Wie aus Fig.1 ersichtlich, sind in einer vorteilhaften Ausführungsform der Erfindung mehrere Elektroden jeweils pro Spalte 14a,14b,14c,14d und pro Zeile 15a,15b,15c,15d miteinander verbunden, wobei sich das aktive Sensorelement 16, bestehend aus einem Elektrodenpaar 14,15, jeweils im Schnittpunkt der angesteuerten Spalten- bzw. Zeilenelektrode befindet.

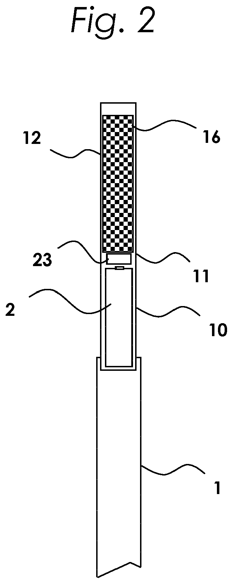

Die von den einzelnen Elektrodenpaaren 14,15 ausgehenden Signale 24 sind ganz besonders bevorzugt in aktive und passive Signale 24 unterteilt, wobei die aktiven Signale 24 von der Einrichtung 1 mittels einer Sendeeinrichtung 23 (siehe Fig.2) an ein externes Empfangsgerät zur weiteren Verarbeitung oder Auswertung übertragen werden. Da nur aktive Informationen übertragen werden, wird hierdurch der Energieverbrauch stark reduziert. Durch den kleinen Energiebedarf können die Batterien 2 an bzw. in der Einrichtung 1 klein gehalten werden und wirken sich so nicht sonderlich auf das Gewicht der Einrichtung 1 aus.

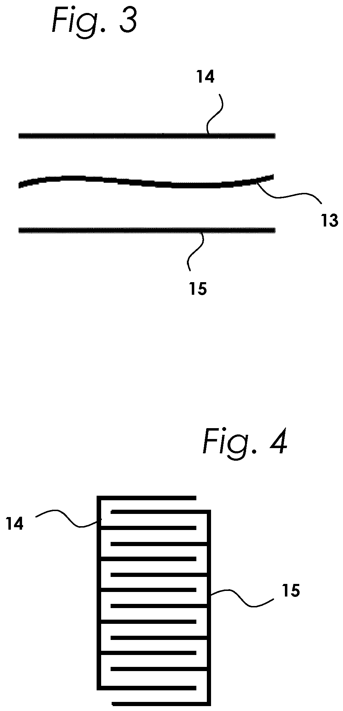

Gemäß der in Fig.3 dargestellten Ausführung des Drucksensors 2 sind die Elektroden 14,15 aufeinander geführt, wobei die resistive Folie 13 zwischen den Elektroden 14,15 platziert wird.

Gemäß der in Fig.4 dargestellten Ausführung des Drucksensors 2 sind die Elektroden 14,15 ineinander geführt, wobei die resistive Folie 13 auf den Sensorelementen 16 platziert wird.

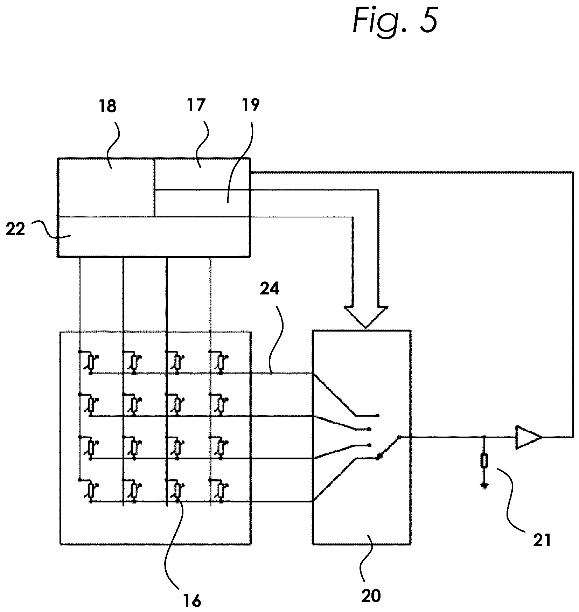

Wie aus Fig.5 ersichtlich, schaltet der Mikrokontroller 18 den Multiplexer 20 auf die erste Zeilenelektrode. Anschließend versorgt er die erste Spaltenelektrode mit Spannung, indem er den entsprechenden GPIO-Ausgang 22 auf "high" setzt. Der Signalausgang am Multiplexer 20 ist mit einer Verstärkerschaltung 21 verbunden, welche den Spannungsabfall über einem Referenzwiderstand misst. Das Signal 24 wird verstärkt, invertiert und anschließend dem ADC 17 des Mikrocontrollers 18 übergeben. Sobald der ADC 17 das Signal 24 ausgewertet hat, wird der erste Ausgang wieder auf "low" gesetzt. Ausgang Nummer zwei wird nun auf "high" gesetzt. Die zweite Spaltenelektrode wird mit Spannung versorgt. Erneut wird wieder der Spannungsabfall über dem Referenzwiderstand gemessen. Der Multiplexer 20 wird solange auf der ersten Zeilenelektrode geschaltet bleiben, bis alle Spalten ausgelesen wurden. Anschließend wird die zweite Zeilenelektrode auf den Signalausgang am Multiplexer 20 geschaltet. Die Vorgänge wiederholen sich, bis alle Sensorelemente 16 ausgelesen sind. Anschließend können die Daten verarbeitet werden und der Auslesevorgang erfolgt von neuem.

Das erfindungsgemäße Druck- und Positionsmesssystem beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Einrichtung
- 2: Batterie
- 10: Handgriff
- 11: Griffzone
- 12: Drucksensor
- 13: resistive Folie
- 14,15: Elektrodenpaare
- 14a,14b,14c,14d: Elektrodenpaare in Spalten
- 15a,15b,15c,15d: Elektrodenpaare in Zeilen
- 16: Sensorelement
- 17: ADC
- 18: Mikrocontroller
- 19: Multiplexer-Schalter
- 20: Multiplexer
- 21: Verstärkerschaltung
- 22: GPIO-Ausgang
- 23: Sendereinrichtung
- 24: Signal

## Patentansprüche

1. Druck- und Positionsmesssystem für manuell betätigbare Einrichtungen (1) mit einem Handgriff (10), bei dem die Griffzone (11) der am Handgriff (10) der Einrichtung (1) anliegenden Finger- und Handflächen mittels mindestens einem Drucksensor (12) erfasst wird,
**dadurch gekennzeichnet, dass**
der mindestens eine Drucksensor (12) eine resistive Folie (13) sowie eine Vielzahl elektrisch isolierter Elektrodenpaare (14,15) umfasst.

2. Druck- und Positionsmesssystem nach Anspruch 1,
**dadurch gekennzeichnet, dass**
zur Druckmessung eine Ermittlung des in Abhängigkeit vom Anpressdruck und umgekehrt proportional zum Widerstand stehenden Spannungsabfalls an einer zwischen zwei Elektroden (14,15) herzustellenden, elektrischen Verbindung erfolgt.

3. Druck- und Positionsmesssystem nach Anspruch 1,
**dadurch gekennzeichnet, dass**
zur Druckmessung eine Ermittlung des in Abhängigkeit vom Anpressdruck und umgekehrt proportional zum Widerstand stehenden Stroms durch eine zwischen zwei Elektroden (14,15) herzustellende, elektrische Verbindung erfolgt.

4. Druck- und Positionsmesssystem nach Anspruch 1,
**dadurch gekennzeichnet, dass**
zur Druckmessung eine Ermittlung des in Abhängigkeit vom Anpressdruck stehenden Widerstands einer zwischen zwei Elektroden (14,15) herzustellenden, elektrischen Verbindung erfolgt.

5. Druck- und Positionsmesssystem nach einem der vorangegangenen Ansprüche,
**dadurch gekennzeichnet, dass**
mehrere Elektroden jeweils pro Spalte (14a,14b,14c,14d) und pro Zeile (15a,15b,15c,15d) miteinander verbunden sind, wobei sich das aktive Sensorelement (16), bestehend aus einem Elektrodenpaar (14,15), jeweils im Schnittpunkt der angesteuerten Spalten- bzw. Zeilenelektrode befindet.

6. Druck- und Positionsmesssystem nach den Ansprüchen 1 und 2,
**dadurch gekennzeichnet, dass**
die Elektroden (14,15) ineinander geführt sind, wobei die resistive Folie (13) auf den Sensorelementen (16) platziert ist.

7. Druck- und Positionsmesssystem nach einem der vorangegangenen Ansprüche,
**dadurch gekennzeichnet, dass**
die von den einzelnen Elektrodenpaaren (14,15) ausgehenden Signale (24) in aktive und passive Signale unterteilt sind, wobei die aktiven Signale von der Einrichtung (1) mittels einer Sendeeinrichtung an ein externes Empfangsgerät zur weiteren Verarbeitung oder Auswertung übertragen werden.
